# EUROPÄISCHE PATENTANMELDUNG

(11) **EP 2 369 789 A1**
(43) Veröffentlichungstag der Anmeldung: **28.09.2011**
(21) Anmeldenummer: 11159375.2
(22) Anmeldetag: 23.03.2011
(51) Int. Cl.: H04L 12/28

(54) **Verfahren zum Betreiben eines Gebäudeinstallationssystems sowie Gebäudeinstallationssystem**

(30) Priorität: 26.03.2010 DE 102010016165
(71) Anmelder: Raumcomputer Entwicklungs- und Vertriebs GmbH, 76137 Karlsruhe (DE)
(72) Erfinder: Spettel, Ralf Jürgen Dipl.-Ing., 76 227 Karlsruhe (DE)
(74) Vertreter: Haverkamp, Jens

(57) **Zusammenfassung**

Beschrieben ist ein Verfahren zum Betreiben eines Gebäudeinstallationssystems 1. Dieses umfasst ein Datennetzwerk 2, an das der oder die Aktoren und/oder Sensoren zumindest einer Gebäudeinstallation I₁, I₂, eine Servereinheit 3 sowie ein oder mehrere, jeweils ein Display 7 umfassende Bedienkonsolen 6, 6.1 zum Ansteuern der zumindest einen Gebäudeinstallation I₁, I₂ angeschlossen sind. Das Datennetzwerk 2 wird als IP-Netzwerk betrieben. Die Servereinheit 3 und die zumindest eine Bedienkonsole 6, 6.1 kommunizieren über das Netzwerk 2. Zum Aufbau der graphischen Oberfläche des Displays 7 einer solchen Bedienkonsole 6, 6.1 werden entsprechende Bilddaten von der Servereinheit 3 an die Bedienkonsole 6, 6.1 übermittelt. Die übermittelten Bilddaten sind das Ergebnis einer in bzw. von der Servereinheit 3 vorgenommenen Umsetzung von in Bezug auf die Spezifikation des Displays 7 in unformatierter Form vorliegenden Daten unter Berücksichtigung der Displayspezifikation der zumindest einen Bedienkonsole 6, 6.1.

Beschrieben ist ferner ein Gebäudeinstallationssystem 1. Sein Datennetzwerk 2 ist als Netzwerk mit IP-Technologie ausgeführt. Die zumindest eine Bedienkonsole 6, 6.1 ist konzipiert, damit auf dem Display 7 einer solchen Bedienkonsole 6, 6.1 eine durch die Servereinheit 3 aufgebaute graphische Oberfläche als Bild anzeigbar ist. Die Servereinheit 3 umfasst eine Rendering-Maschine, die dazu geeignet ist, die Bilddaten, die in der Servereinheit 3 in unformatierter Form vorliegen, unter Berücksichtigung der Displayspezifikation der Bedienkonsole 6, 6.1 umzusetzen.

## Beschreibung

Die Erfindung betrifft ein Verfahren zum Betreiben eines Gebäudeinstallationssystems, umfassend ein Datennetzwerk, an das der oder die Aktoren und/oder Sensoren zumindest einer Gebäudeinstallation, eine Servereinheit sowie ein oder mehrere, jeweils ein Display umfassende Bedienkonsolen zum Ansteuern der zumindest einen Gebäudeinstallation angeschlossen sind, wobei dass das Datennetzwerk zumindest teilweise als IP-Netzwerk betrieben wird und die Servereinheit und die zumindest eine Bedienkonsole über das IP-Datennetzwerk miteinander kommunizieren. Ferner betrifft die Erfindung ein Gebäudeinstallationssystem, umfassend ein Datennetzwerk, an das der oder die Aktoren und/oder Sensoren zumindest einer Gebäudeinstallation, eine Servereinheit sowie ein oder mehrere, jeweils ein Display umfassende Bedienkonsolen zum Ansteuern der Gebäudeinstallation angeschlossen sind, wobei das Datennetzwerk als Netzwerk mit IP-Technologie ausgeführt ist und die zumindest eine Bedienkonsole konzipiert ist, damit auf dem Display einer solchen Bedienkonsole eine durch die Servereinheit aufgebaute graphische Oberfläche als Bild anzeigbar ist.

Bei derartigen Gebäudeinstallationssystemen handelt es sich um Datennetzwerke, die typischerweise als Bus betrieben werden. Die einzelnen Aktoren und Sensoren von Gebäudeinstallationen auch unterschiedlicher Gewerke sind an einen solchen Datenbus angeschlossen. Teil eines solchen Datennetzwerkes kann eine Servereinheit als Steuergerät sein, die als Installations- und Steuerstelle für den Datenbus fungiert. Angeschlossen an den Bus sind ferner typischerweise mehrere Bedienkonsolen, die als Touchscreen-Display ausgebildet sein können. Die Bedienkonsolen befinden sich in einzelnen Räumen eines Gebäudes und dienen dem Zweck, über diese ein oder mehrere Installationen anzusteuern. Angesteuert werden als Installationen eines Gebäudes typischerweise die Beleuchtung, Jalousien, Sonnenblenden, Klimaanlage, Heizung oder dergleichen. Die Konzeption der Bedienkonsolen mit einem Display erlaubt eine Anzeige des Zustandes bzw. des Status einzelner Installationen bzw. der Stellung der Aktoren der einzelnen Installationen. Da eine solche Bedienkonsole nicht lediglich als Ausgabeeinheit zum Anzeigen sondern v. a. auch als Eingabemodul konzipiert ist, können über eine solche Bedienkonsole die einzelnen Installationen zum Verändern ihrer Einstellung bzw. ihres Status angesteuert werden. Dieses erfolgt im Falle der Konzeption der Bedienkonsole als Touchscreen über eine entsprechende Bildschirmeingabe und/oder durch auf der Bedienkonsole angeordnete Bedienelemente, wie Taster, Wippen oder dergleichen.

Die Installation eines solchen Gebäudeinstallationssystems erfolgt üblicherweise gemäß den Anforderungen des europäischen Installationsbusses (EIB) durch den die Installation der Sensoren und Aktoren miteinander sowie das Protokoll der Kommunikation festgelegt ist. Aktuell eingesetzt wird typischerweise der KNX-Standard als Weiterentwicklung des EIB, der eine Erweiterung um Konfigurationsmechanismen und Übertragungsmedien gegenüber dem EIB darstellt. Bei diesem Konzept erfolgt eine Adressevergabe der an das Datennetzwerk angeschlossenen Teilnehmer sowie die Übermittlung der Steuerdaten über den Datenbus. Demzufolge müssen die einzelnen Busteilnehmer hinsichtlich ihrer technischen Auslegung als so genannte Stand-alone-Geräte konzipiert sein, die über den Busankoppler Steuerbefehle empfangen und/oder Statusinformationen oder Steuerbefehle über den Bus an andere Busteilnehmer kommunizieren. Im Falle einer Bedienkonsole beinhaltet dieses Konzept, dass die notwendige Software zum Darstellen der graphischen Oberfläche auf dem Display einer solchen Bedienkonsole gespeichert ist. Bei einer Änderung des graphischen Layouts muss daher eine Aktualisierung bzw. Änderung der Software an jeder Bedienkonsole individuell vorgenommen werden.

Moderne Bedienkonsolen, die über einen Bildschirm als Display verfügen, typischerweise als Touchscreen ausgelegt, werden mitunter auch für eine Breitbandkommunikation, beispielsweise mit Anschluss an einen PC und über diesen mit Anschluss auch an das Internet genutzt. Eine solche Bedienkonsole ist in DE 20 2007 010 024 U1 beschrieben. Bei diesem Gerät handelt es sich um ein so genanntes Mediengerät mit einer Funkeinheit zum Empfangen von Audio- und Videodaten. Videodaten können auf einem Display ausgegeben werden. Ein Lautsprecher dient zum Ausgeben der Audiodaten. Damit dieses Gerät als Bedienkonsole im Rahmen eines Gebäudeinstallationssystems eingesetzt werden kann, verfügt dieses zusätzlich über eine Anschlusseinheit, mit der dieses Gerät an ein Gebäudeinstallationssystem zum Ansteuern von Gebäudeinstallationen bzw. deren Aktoren verfügt. Ist darüber hinaus eine interne Kommunikation innerhalb des Gebäudes vorgesehen, verfügt dieses Gerät ferner über eine Hauskommunikationsschnittstelle. Somit handelt es sich bei diesem Gerät, wenn an ein Gebäudeinstallationssystem mittels einer Anschlusseinrichtung angeschlossen, um eine Bedienkonsole, die zum Erzielen der vorgenannten Funktionalität an mehrere Netzwerke angeschlossen ist. Dementsprechend verfügt diese vorbekannte Bedienkonsole über einen entsprechende Anzahl an Schnittstellen.

Aus US 2010/0017739 A1 ist ein Verfahren zum Definieren eines graphischen Steuerungsverfahrens zur Verwendung in einem automatisierten Gebäudeinstallationssystem beschrieben. Dabei ist eine Client-Server-Architektur vorgesehen, wobei die Client-Server-Kommunikation über ein HTTP-Protokoll unter Zugrundelegung eines TCP-IP-Protokolls erfolgt. Bei diesem vorbekannten Verfahren ist jeder Client mit einer Darstellungssoftware ausgestattet, um gemäß den vom Server erhaltenen Anweisungen diese auf dem dem Client zugeordneten Display darstellen zu können. Die Umsetzung umformatierter graphischer Daten auf die Spezifikation des Displays erfolgt somit mittels des Client.

Ausgehend von dem vordiskutierten Stand der Technik liegt der Erfindung die Aufgabe zugrunde, ein eingangs genanntes Verfahren sowie ein eingangs genanntes Gebäudeinstallationssystem vor allem hinsichtlich der Konzeption und dem Aufbau des oder der eingesetzten Bedienkonsolen vor allem gegenüber denjenigen aus US 2010/0017739 A1 bekannten für die Zwecke eines Gebäudeinstallationssystems zu vereinfachen.

Gelöst wird diese Aufgabe erfindungsgemäß durch ein eingangs genanntes, gattungsgemäßes Verfahren, bei dem zum Aufbau der graphischen Oberflächen des Displays einer solchen Bedienkonsole Bilddaten von der Servereinheit an die Bedienkonsole übermittelt werden, die das Ergebnis einer in bzw. von der Servereinheit vorgenommenen Umsetzung von in Bezug auf die Spezifikation des Displays in unformatierter Form vorliegenden Daten unter Berücksichtigung der Displayspezifikation der zumindest einen Bedienkonsole sind.

Gelöst wird die Aufgabe ferner durch ein eingangs genanntes, gattungsgemäßes Gebäudeinstallationssystem, bei dem die Servereinheit eine Rendering-Maschine umfasst, die dazu geeignet ist, die Bilddaten, die in der Servereinheit in unformatierter Form vorliegen, unter Berücksichtigung der Displayspezifikation der Bedienkonsole umzusetzen.

Bei diesem Gebäudeinstallationssystem wird zum Betreiben desselben ein IP-Netzwerk ausgebildet. Ein solches IP-Netzwerk arbeitet nach dem Internetprotokoll (IP) und kann beispielsweise als Ethernet ausgeführt sein. Die Ausbildung des Datennetzwerkes als IP-Netzwerk erlaubt, dass über das Netzwerk auch größere Datenmengen übertragen werden können, vor allem Datenmengen, die in herkömmlichen Installationsbussystemen nicht oder nicht in hinreichender Zeit übertragen werden können. Es wird vermutet, dass hiermit erstmals vorgeschlagen wird, ein Gebäudeinstallationssystem mit einem IP-Netzwerk aufzubauen. Bei diesem IP-Netzwerk wird der gesamte Datenfluss über das IP-Netzwerk geleitet, und zwar sämtliche für die Ansteuerung des oder daran angeschlossenen Gebäudeinstallationen notwendigen Daten und Befehle sowie Audio- und/oder Videodaten zum Ausgeben an einer Bedienkonsole. Folglich ist bei dieser Konzeption nur ein einziges Netzwerk zum Realisieren der vorbeschriebenen Funktionalitäten an einer Bedienkonsole erforderlich. Folglich benötigt eine Bedienkonsole nur eine einzige Schnittstelle, um mit dieser die vorbeschriebenen Funktionalitäten nutzen zu können. Das Vorsehen nur einer einzigen Schnittstelle ist zweckmäßig hinsichtlich des typischerweise in einer Unterputzdose nur begrenzt zur Verfügung stehenden Bauraumes. Gleichzeitig sind die Herstellkosten augrund der geringeren Anzahl an Schnittstellen reduziert.

Die Konzeption des Datennetzwerkes als IP-Netzwerk erlaubt eine weitere Vereinfachung des Aufbaus einer Bedienkonsole eines solchen Gebäudeinstallationssystems. Grund für die Möglichkeit dieser Vereinfachung ist das IP-Netzwerk, welches genutzt wird, um die graphische Oberfläche an dem Display einer Bedienkonsole von einer Servereinheit auf die Bedienkonsole zu übertragen. Folglich braucht innerhalb der Bedienkonsole eine entsprechende Software für die Generierung der abzubildenden Steuerdaten und auch der Bedienoberfläche selbst nicht mehr vorhanden zu sein. Eine Aktualisierung oder Änderung der graphischen Anzeige auf der bzw. den Bedienkonsolen eines solchen Gebäudeinstallationssystems wird zentral an der bzw. durch die Servereinheit vorgenommen werden. Damit ist auch die zum Realisieren einer solchen Bedienkonsole notwendige Hardware und Software gegenüber vorbekannten Bedienkonsolen reduziert, jedoch ohne Einbuße an Funktionalität. Von besonderem Vorteil einer solchen Bedienkonsole ist, dass diese sehr klein ausgelegt werden kann. Vorteilhaft an diesem Konzept ist zudem, dass eine Bedienkonsole zur Verwendung in dem Verfahren bzw. als Teil eines Gebäudeinstallationssystems aufgrund der nur wenigen benötigen Elemente besonders kostengünstig hergestellt und angeboten werden kann. Vor allem ist es bei diesem Konzept möglich, von ihrer Gestaltung und/oder ihrer Auslegung her verschiedene Bedienkonsolen in ein und dasselbe Gebäudeinstallationssystem zu implementieren, ohne dass dieses zu Kommunikationsproblemen führen würde, da sämtliche Vorgänge durch die Servereinheit gesteuert werden. Einzig erforderlich ist, dass die Servereinheit die Displayspezifikation der Bedienkonsole kennt.

Bei dem beanspruchten Verfahren ist vorgesehen, dass die auf der oder den Bedienkonsolen darzustellende graphische Oberfläche durch Übertragen von durch eine geeignete Rendering-Maschine bereitgestellte Bilddaten (Pixeldaten) aus ansonsten in Bezug auf die Spezifikation des Displays, an dem die Bilddaten dargestellt werden sollen, unformatiert vorliegenden Daten von der Servereinheit an die Bedienkonsole bereitgestellt wird, welche unformatierten Daten unter Berücksichtigung der DisplaySpezifikation (beispielsweise Größe) der Bedienkonsole gerendert werden. Dabei ist vorgesehen, dass eine Aktualisierung der Displayanzeige gemäß einem bevorzugten Ausführungsbeispiel nur in denjenigen Bildbereichen erfolgt, in denen eine Änderung gegenüber dem vorherig angezeigten Bild stattgefunden hat. Hierdurch kann eine nicht unerhebliche Reduktion der von der Servereinheit auf die Bedienkonsolen zu übermittelnde Datenmenge erreicht werden. Dieses gilt vor allem bei einer aktuellen Anzeige auf dem Display einer solchen Bedienkonsole zum Anzeigen des Zustandes der Gebäudeinstallationssysteme, da in Bezug auf diese Änderungen nicht laufend und üblicherweise nicht bei allen Gebäudeinstallationssystemen gleichzeitig erfolgen.

Je nach Konzeption der graphischen Anzeige auf dem Display einer solchen Bedienkonsole braucht der Hintergrund der Anzeige ohnehin bei einer Aktualisierung nicht nochmals übermittelt werden. Eine Aktualisierung der Displayanzeige erfolgt typischerweise, wenn durch die Servereinheit eine Statusänderung in einem der an das Gebäudeinstallationssystem angeschlossenen Installationen festgestellt worden ist. Eine Aktualisierung wird auch dann vorgenommen, wenn nutzerseitig die Bedienkonsole betätigt wird, beispielsweise aus einem Stand-by-Modus in einen Betriebsmodus gebracht wird. Gleichwohl kann bei einer Konzeption, bei der die Bedienkonsole bei Nichtgebrauch oder nach einer bestimmten Zeitdauer einer Nichtbenutzung in einen Stand-by-Modus gefahren wird, die Bedienkonsole nach erneutem Hochfahren von der Servereinheit die vollständigen Bilddaten für das gesamte Display erhalten.

Ausgeführt sein kann eine solches IP-Netzwerk beispielsweise als Ethernet, an das die Servereinheit, die Bedienkonsolen und die Gebäudeinstallationssysteme bzw. deren Aktoren und Sensoren angeschlossen sind. Teil des Netzwerkes kann eine Schnittstelle zum Internet sein. Dieses würde ein Betrieb des Gebäudeinstallationssystems ermöglichen, bei dem Daten von der Servereinheit aus dem Internet an die Bedienkonsole in Form von Bilddaten übertragen werden. Gleichzeitig kann auf diese Weise ohne weiteres ein Aktualisierung der Auslegung der an den Displays der Bedienkonsolen anzuzeigenden graphischen Oberfläche erfolgen. Die Gebäudeinstallationssysteme und Teile desselben können über beispielsweise einer IP/KNX-Schnittstelle an das IP-Netzwerk angeschlossen sein. Eine solche Konzeption wird man in aller Regel einsetzen, wenn eine bereits vorhandene Gebäudeinstallation unter Verwendung eines herkömmlichen Datenbusses weiter genutzt werden soll. Vorzugsweise wird man jedoch die Aktoren und/oder Sensoren der Gebäudeinstallationssysteme unmittelbar an das IP-Netzwerk anschließen wollen.

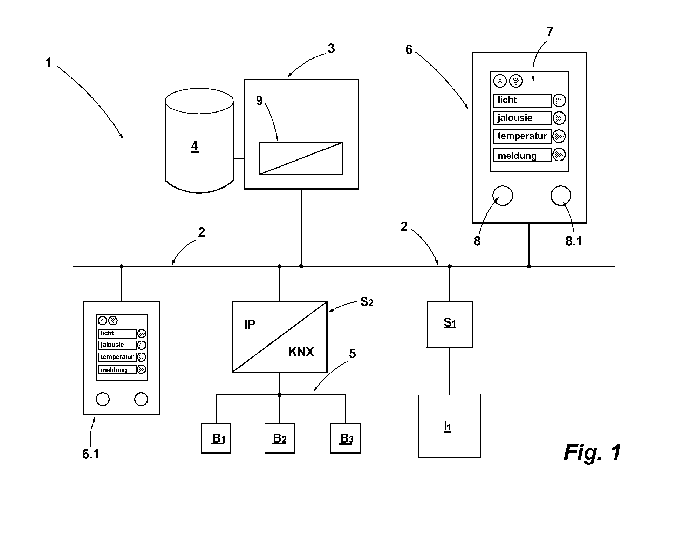

Nachfolgend ist die Erfindung anhand eines Ausführungsbeispiels unter Bezugnahme auf die beigefügte Figur 1 beschrieben. Figur 1 zeigt nach Art eines Blockdiagramms ein Gebäudeinstallationssystem 1. Das Gebäudeinstallationssystem 1 umfasst ein auf IP-Technologie basierendes Netzwerk 2, welches bei dem dargestellten Ausführungsbeispiel als Ethernet ausgeführt ist. Teil des Gebäudeinstallationssystems 1 ist eine Servereinheit 3 mit einer dieser zugeordneten Datenbank 4. Die Servereinheit 3 ist, wie aus Figur 1 erkennbar, an das Ethernet 2 angeschlossen. Teil des Gebäudeinstallationssystems 1 sind des Weiteren unterschiedliche Gebäudeinstallationen, beispielsweise Beleuchtung, Jalousien, Heizung, Klima und Lüftung und dergleichen. Beispielhaft ist in Figur 1 bei dem dargestellten Ausführungsbeispiel eine Gebäudeinstallation, beispielsweise die Beleuchtung an das IP-Netzwerk 2 angeschlossen. Angeschlossen an das Ethernet 2 sind die zum Steuern der Beleuchtung eingesetzten Aktoren. Diese Installation ist vereinfacht dargestellt und in der Figur mit I₁ gekennzeichnet. Angeschlossen ist die Installation I₁ an das Ethernet 2 über eine entsprechende Schnittstelle S₁. Im Wege eines Beispieles ist eine weitere Installation I₂ an das Ethernet 2 angeschlossen. Die Gebäudeinstallation I₂ umfasst mehrere Aktoren und Sensoren, die untereinander über einen KNX-Bus 5 miteinander in Verbindung stehen und über diesen angesteuert bzw. ausgelesen werden können. Die beispielhaft in Figur 1 dargestellten Aktoren und Sensoren des KNX-Bussystems 5 sind als Busteilnehmer B₁, B₂, B₃ kenntlich gemacht. Angeschlossen ist der KNX-Bus 5 über eine IP/KNX-Schnittstelle S₂ an das Ethernet 2.

Dem Gebäudeinstallationssystem 1 zugehörig sind ferner mehrere, in unterschiedlichen Räumen oder Teilen des Gebäudes installierte Bedienkonsolen, von denen in Figur 1 beispielhaft zwei Bedienkonsolen 6, 6.1 gezeigt sind. Nachfolgend ist die Bedienkonsole 6 beschrieben. Die Bedienkonsole 6.1 ist identisch aufgebaut. Die Bedienkonsole 6 dient als Datenein- und Datenausgabegerät und verfügt über ein Display 7 und über zwei Taster 8, 8.1. Bei dem Display 7 handelt es sich um ein Touchscreen, sodass über das Display 7 ebenfalls eine Eingabe erfolgen kann. Die Bedienkonsole 6 dient unter anderem zum Ansteuern der an das IP-Netzwerk 2 angeschlossenen Gebäudeinstallationen I₁, I₂. Die Bedienkonsole 6 ist konzipiert, damit die auf dem Display 7 erscheinende Anzeige in der Servereinheit 3 generiert wird. Somit umfasst die Bedienkonsole 6 lediglich die notwendigen Baugruppen und die notwendige Software, um die von der Servereinheit 3 generierten Bilddaten empfangen und anzeigen zu können. In Figur 1 ist auf dem Display 7 schematisiert ein erstes Bild gezeigt, auf dem verschiedene Gebäudeinstallationen nach Art eines Menüs dargestellt sind. In der an sich bekannten Art und Weise erfolgt eine Bedienung menügeführt durch Betätigen des als Touchscreen ausgebildeten Displays, um beispielsweise die Installation Licht oder die Installation Jalousie oder eine andere Installation anzusteuern oder einen Status einer solchen Installation abzufragen. Insofern umfasst die Bedienkonsole 6 ebenfalls die notwendigen Einrichtungen, um detektierte Displayberührungen an den vordefinierten Schaltstellen des Display 7 als Bedieneingabe zu erkennen und einen solchen Befehl an die Servereinheit 3 übermitteln zu können, von der aus sodann die jeweilig gewünschte Installation bzw. deren Aktor wiederum über das IP-Netwerk 2 angesteuert wird.

Der Bildaufbau bei der Bedienkonsole 6 - gleiches gilt für die weiteren Bedienkonsolen, etwa für die Bedienkonsole 6.1 - erfolgt durch eine der Servereinheit 3 zugeordnete Rendering-Maschine 9. Mit dieser werden in Bezug auf die Spezifikation des Display 7 unformatierte Daten, insbesondere Daten aus der Datenbank 4 unter Berücksichtigung der Spezifikationen des Displays 7 gerendert und über das Ethernet 2 an die Bedienkonsole 6 übertragen. Diese Daten können beispielsweise in HTML-Form vorliegen. Solange eine Änderung der Anzeige nicht erforderlich ist, werden von der Servereinheit 3 keine weiteren Bilddaten an die Bedienkonsole 6 übertragen. Wird etwa durch eine nutzerseitige Eingabe auf den Button "Licht" eine geänderte graphische Darstellung am Display benötigt, werden nur diejenigen Bereiche des anzuzeigenden Bildes von der Servereinheit 3 an die Bedienkonsole 6 übertragen, die gegenüber der vorherigen Darstellung geändert worden sind. Die hierzu notwendigen Techniken sind hinlänglich bekannt und brauchen daher an dieser Stelle nicht näher beschrieben zu werden.

Im Falle einer Änderung der graphischen Auslegung des anzuzeigenden Displays der Bedienkonsole 6 oder auch der an das Netzwerk 2 angeschlossenen Bedienkonsole 6.1 werden in die Datenbank 4 neue Grafikdaten eingespeist, beispielsweise über ein Internetportal der Servereinheit 3. Damit ist eine Aktualisierung sämtlicher Bedienkonsolen, die an das Netzwerk 2 angeschlossen sind, problemlos möglich. Folglich ist eine Änderung in der graphischen Darstellung möglich, ohne dass hierzu jede einzelne Bedienkonsole umprogrammiert werden müsste, wie dieses beim Stand der Technik der Fall ist.

Das vorbeschriebene Konzept beinhaltet ebenfalls die Möglichkeit, an unterschiedlichen, an das Netzwerk 2 angeschlossenen Bedienkonsolen unterschiedliche graphische Anzeigen zu generieren.

Die Konzeption des Netzwerkes als IP-Netzwerk erlaubt es, dass ohne weiteres auch Audio-, Bild- oder Videodaten über das Netzwerk 2 von der Servereinheit 3 an die Bedienkonsolen 6 übertragen werden können. Somit eignet sich das Netzwerk 2 gleichfalls für multimediale Anwendungen der daran angeschlossenen Bedienkonsolen, über deren Display sodann Bilder oder Videos oder eine Internetfunktionalität genutzt werden kann. Von Bedeutung ist, dass eine Realisierung dieser Funktionalitäten möglich ist, ohne dass die Hard- und Softwareansprüche an eine solche Bedienkonsole hoch sind. Vielmehr lässt sich dieses mit Bedienkonsolen erreichen, die gegenüber vorbekannten Bedienkonsolen hinsichtlich der eingesetzten Hard- und Softwarebestandteile abgespeckt sind.

### Bezugszeichenliste

- 1: Gebäudeinstallationssystem
- 2: Netzwerk, Ethernet
- 3: Servereinheit
- 4: Datenbank
- 5: KNX-Bus
- 6, 6.1: Bedienkonsole
- 7: Display
- 8, 8.1: Bedientaster
- 9: Rendering-Maschine

- B₁-B₃: Busteilnehmer
- I₁, I₂: Installation
- S₁, S₂: Schnittstelle

## Patentansprüche

1. Verfahren zum Betreiben eines Gebäudeinstallationssystems (1), umfassend ein Datennetzwerk (2), an das der oder die Aktoren und/oder Sensoren zumindest einer Gebäudeinstallation, eine Servereinheit (3) sowie ein oder mehrere, jeweils ein Display (7) umfassende Bedienkonsolen (6, 6.1) zum Ansteuern der zumindest einen Gebäudeinstallation (I₁, I₂) angeschlossen sind, wobei das Datennetzwerk (2) zumindest teilweise als IP-Netzwerk betrieben wird und die Servereinheit (3) und die zumindest eine Bedienkonsole (6, 6.1) über das IP-Datennetzwerk (2) miteinander kommunizieren, **dadurch gekennzeichnet, dass** zum Aufbau der graphischen Oberflächen des Display (7) einer solchen Bedienkonsole (6, 6.1) Bilddaten von der Servereinheit (3) an die Bedienkonsole (6, 6.1) übermittelt werden, die das Ergebnis einer in bzw. von der Servereinheit (3) vorgenommenen Umsetzung von in Bezug auf die Spezifikation des Displays (7) in unformatierter Form vorliegenden Daten unter Berücksichtigung der Displayspezifikation der zumindest einen Bedienkonsole (6, 6.1) sind.

2. Verfahren nach Anspruch 1, **dadurch gekennzeichnet, dass** nach einem erstmaligen Übermitteln von Bilddaten zum Aufbau einer graphischen Oberfläche auf dem Display (7) einer solchen Bedienkonsole (6, 6.1) bei einer Aktualisierung eines angezeigten Bildes nur diejenigen Bereiche des Bildes in Form von Bilddaten von der Servereinheit (3) an die Bedienkonsole (6, 6.1) übermittelt werden, die sich gegenüber dem aktuell angezeigten Bild verändert haben.

3. Verfahren nach Anspruch 2, **dadurch gekennzeichnet, dass** eine Aktualisierung der Displayanzeige erfolgt, wenn entweder servereinheitsseitig eine Datenänderung festgestellt worden ist, die eine aktualisierte Anzeige auf dem Display (7) des oder der Bedienkonsole (6, 6.1) notwendig macht oder wenn nutzerseitig die Bedienkonsole (6, 6.1) betätigt worden ist.

4. Verfahren nach Anspruch 3, **dadurch gekennzeichnet, dass** mittels der IP-Kommunikation zwischen der Servereinheit (3) und der zumindest einen Bedienkonsole (6, 6.1) Audio- und/oder Videodaten zum Ausgeben bzw. Anzeigen an einer solchen Bedienkonsole (6, 6.1) übertragen werden.

5. Gebäudeinstallationssystem umfassend ein Datennetzwerk (2), an das der oder die Aktoren und/oder Sensoren zumindest einer Gebäudeinstallation (I₁, I₂), eine Servereinheit (3) sowie ein oder mehrere, jeweils ein Display (7) umfassende Bedienkonsolen (6, 6.1) zum Ansteuern der Gebäudeinstallation (I₁, I₂) angeschlossen sind, wobei das Datennetzwerk (2) als Netzwerk mit IP-Technologie ausgeführt ist und die zumindest eine Bedienkonsole (6, 6.1) konzipiert ist, damit auf dem Display (7) einer solchen Bedienkonsole (6, 6.1) eine durch die Servereinheit (3) aufgebaute graphische Oberfläche als Bild anzeigbar ist, **dadurch gekennzeichnet, dass** die Servereinheit (3) eine Rendering-Maschine umfasst, die dazu geeignet ist, die Bilddaten, die in der Servereinheit (3) in unformatierter Form vorliegen, unter Berücksichtigung der Displayspezifikation der Bedienkonsole (6, 6.1) umzusetzen.

6. Gebäudeinstallationssystem nach Anspruch 5, **dadurch gekennzeichnet, dass** an das IP-Datennetzwerk (2) ein Gebäudeinstallationsbus (5) mittels einer IP/KNX-Schnittstelle angeschlossen ist.
